# NEUE EUROPÄISCHE PATENTSCHRIFT

(11) **EP 1 525 564 B2**
(45) Veröffentlichungstag und Bekanntmachung des Hinweises auf die Entscheidung über den Einspruch: **22.08.2012**
(45) Hinweis auf die Patenterteilung: 04.03.2009
(21) Anmeldenummer: 03763504.2
(22) Anmeldetag: 16.07.2003
(51) Int. Cl.: G07D 7/12, G06K 19/077, G07D 7/00, B42D 15/10, G06K 19/16

(54) **VERFAHREN ZUR HERSTELLUNG EINER BANKNOTE**
METHOD FOR PRODUCING A BANKNOTE
PROCEDE POUR LA FABRICATION D'UN BILLET DE BANQUE

(30) Priorität: 17.07.2002 AT 10782002
(43) Veröffentlichungstag der Anmeldung: 27.04.2005
(73) Patentinhaber: Oesterreichische Banknoten- und Sicherheitsdruck GmbH, 1096 Wien (AT)
(72) Erfinder: SCHWARZBACH, Daniel, A-1120 Wien (AT); FAJMANN, Peter, A-3130 Herzogenburg (AT); DEINHAMMER, Harald, A-1170 Wien (AT)
(74) Vertreter: Gibler, Ferdinand
(86) Internationale Anmeldenummer: PCT/AT2003/000200
(87) Internationale Veröffentlichungsnummer: WO 2004/008397

(56) Entgegenhaltungen:
- EP-A- 0 919 950
- EP-A1- 0 905 657
- EP-A1- 1 448 392
- WO-A-01/43066
- WO-A1-92/1184
- WO-A1-02/02350
- WO-A1-99/54842
- US-A- 5 944 927
- US-A- 6 111 303
- US-A1- 2002 030 360
- US-B1- 6 170 880

## Beschreibung

Die Erfindung betrifft ein Verfahren zur Herstellung einer Banknote gemäß dem Oberbegriff des Patentanspruches 1.

Es ist bekannt, Sicherheitsdokumente mit Sicherheitsmerkmalen, wie Tiefdruck, Wasserzeichen, Sicherheitsstreifen, Hologrammen, Kinegrammen od. dgl. zu versehen, um die Echtheit eines Sicherheitsdokumentes überprüfen zu können und die Sicherheitsdokumente möglichst fälschungssicher zu gestalten. Dabei ist es üblich, mehrere verschiedene Sicherheitsmerkmale auf einem Sicherheitsdokument anzubringen. Nachteilig an diesen bekannten Sicherheitsdokumenten ist, daß durch das Hinzufügen eines weiteren Sicherheitsmerkmals die Herstellungszeiten und die Herstellungskosten des Sicherheitsdokumentes erhöht werden. Weiters ist bei diesen bekannten Sicherheitsdokumenten nachteilig, daß sie nicht individualisierbar sind und die Merkmale nach der Emission des Sicherheitsdokumentes nicht adaptiert und/oder upgedatet werden können.

Die WO 01/43066 A1 offenbart eine Scheckkarte mit einem darauf befindlichen Schaltkreis, welcher mit einer Antenne verbunden ist, wobei über dem Schaltkreis ein Hologramm angebracht sein kann. Nachteilig an einer Scheckkarte gemäß der WO 01/43066 A1 ist, daß diese Anordnung eines Schaltkreises mit einer Antenne und eines Hologramms auf einer Scheckkarte eine große Bauhöhe bedingt, wodurch es leicht zu einer Beschädigung des Schaltkreises und/oder des Hologramms kommen kann. Insbesondere kann der Schaltkreis und/oder das Hologramm bei der Handhabung der Scheckkarte an einer Kante od. dgl. versehentlich abgeschert werden. Darüber hinaus bedarf es für das Aufsiegeln des Chip/Antenne/Hologramm - Elementes mittels einer thermoplastischen Folie auf die Scheckkarte eines Spezialwerkzeuges um im Hinblick auf den erforderlichen hohen Aufsiegeldruck Beschädigungen des Chips zu vermeiden.

Aus der EP 1 179 811 A1 geht ein Sicherheitsdokument mit einem Hologramm hervor, bei dem ein Chip in dem Hologramm integriert ist, wobei die Spiegelschicht des Hologramms als Antenne ausgebildet ist. Dadurch, daß das Hologramm als Antenne dient kann die Gesamtbauhöhe im Vergleich zu dem aus der WO 01/43066 A1 bekannten Element herabgesetzt werden, jedoch auf Kosten folgender Nachteile. Die Spiegelschicht eines Hologramms ist üblicherweise aus Aluminium und weist eine sehr geringe Dicke auf, welche etwa 30 nm betragen kann. Nachteilig an einem Sicherheitsdokument gemäß der EP 1 179 811 A1 ist, daß Aluminium eine geringe Gleitfähigkeit aufweist, weshalb es ein schlechtes Antennenmaterial ist, und aufgrund der geringen Dicke der Spiegelschicht die Antenne eine nur geringe Energie aufnehmen kann, wodurch die Reichweite der Antenne gering ist und der Abstand zwischen einem Lesegerät und der Antenne klein sein muß, weshalb das Lesegerät gegenüber der Antenne genau positioniert werden muß. Dadurch wird die Fehleranfälligkeit beim Auslesen der Information des Schaltkreises erhöht, wobei aufgrund eines konstruktionsbedingt nicht unterschreitbaren Abstands ein Auslesen der Information überhaupt unmöglich sein kann. Dieser konstruktionsbedingte Abstand ist z.B. durch die Dicke des Hologramms bestimmt. Ein weiterer Nachteil an dem Sicherheitsdokument gemäß der EP 1 179 811 A1 ist, daß der Chip bei der Herstellung sehr genau gegenüber der Spiegelschicht positioniert werden muß, um eine leitende Verbindung zwischen dem Chip und der Antenne sicherstellen zu können, wodurch die Herstellungskosten erhöht werden.

In der EP 0 919 950 A1 wird ein Modul für eine IC-Karte, eine IC-Karte, sowie die Herstellung einer IC-Karte beschrieben. Ein mit einer Antenne verbundener Chip wird in einer Ausnehmung der Karte eingesetzt ist, wobei der Chip in der laminierten Karte eingebettet ist. Nachteilig an einer Ausführung gemäß der EP 0 919 950 A1 ist, dass dies zu einem dicken, unflexiblen Aufbau führt.

Die US 6 111 303 A beschreibt eine Karte mit einem Chip, der in einer Vertiefung einer Grundschicht IC-Karte eingesetzt ist. Dabei ist dieser Chip mit einer Antenne verbunden, die durch Drahtschleifen gebildet ist, wobei die Drahtschleifen zwischen dem Boden der Vertiefung der Karte und dem IC verlaufen und die Vertiefung nach dem Einsetzen des Chips mit einem Harz ausgegossen wird. In einem weiteren Verfahrensschritt wird eine PVC-Schicht auf die Grundschicht aufgeklebt. Nachteilig an einer Ausführung gemäß der US 6 111 303 A ist, dass dies lediglich zu einem dicken, unflexiblen Aufbau führt, und die große Antennenfläche die durch die Drahtschleifen gebildet wird bei einem durchsichtigen bzw. durchscheinenden Grundkörper nicht versteckt werden kann. Damit ist kein, für den Benutzer verborgenes Sicherheitsmerkmal ausführbar.

Aus der US 6 170 880 B1 geht eine Chipkarte hervor, wobei ein Chip unter einem Hologramm in einer Ausnehmung der Chipkarte angeordnet ist. Weiters ist eine Antenne vorgesehen, wobei die Antenne als im Wesentlichen zwischen der Effektfolie (dem Hologramm) und dem Grundkörper angeordnet ist. Der innere Aufbau einer derartigen Chipkarte führt zu einer großen Bauhöhe und einem unflexiblen Aufbau. Dies macht es weitgehend unmöglich derartige Chipkarten sehr dünn und flexibel auszuführen.

Bei Banknoten ist aus der DE 196 01 358 C2 bekannt, einen Chip bei der Herstellung des Papiers der Banknoten vollständig in die Papiermasse einzubetten und seine Abmessungen so gering zu wählen, daß eine darauffolgende drucktechnische Verarbeitung möglich ist. Nachteilig an den Banknoten gemäß der DE 196 01 358 C2 ist, daß der Chip, welcher ein kostenintensives Sicherheitsmerkmal darstellt, bereits in der Stufe der Papierherstellung eingebracht wird, wodurch der gesamte Ausschuß, der in den einzelnen Produktionsschritten bis zur fertigen Banknote anfällt auch mit einem Chip versehen ist, wodurch sich hohe Herstellungskosten ergeben, da der gesamte Ausschuß der Produktionskette erfahrungsgemäß bei etwa 20% liegen kann. Außerdem muß die Antenne auf dem Chip angeordnet sein, wodurch sich auch hier die Nachteile eines geringen Energietransfers und demgemäß geringer Reichweite ergeben

Aufgabe der Erfindung ist es, ein Verfahren anzugeben, bei dem ein Sicherheitsdokument mit einem Grundkörper aus Papier, Polymer, Kompositwerkstoffen od. dgl., einer Effektfolie, insbesondere einem Hologramm od. dgl., und einem Schaltkreis, wobei der Schaltkreis zwischen dem Grundkörper und der Effektfolie angeordnet und/oder in der Effektfolie eingebettet ist, und mit einer zwischen der Effektfolie und dem Grundkörper angeordneten Antenne verbunden ist, wobei der Schaltkreis in einer Vertiefung des Grundkörpers, insbesondere einem Wasserzeichen od. dgl., angeordnet ist, auf einfache Weise und kostengünstig bergestellt werden kann.

Erfindungsgemäß wird dies durch die Merkmale des Patentanspruches 1 erreicht. Dadurch ergibt sich der Vorteil, daß die Effektfolie und der Chip in einem Arbeitsschritt auf den Grundkörper aufgebracht werden können, wodurch die Herstellungszeit des erfindungsgemäßen Sicherheitsdokuments gering gehalten wird. Weiters kann die Effektfolie und der Chip in einem der letzten Arbeitsschritte bei der Herstellung des Sicherheitsdokumentes auf dieses aufgebracht werden, wobei der Ausschuß der vorhergehenden Produktionskette vorher ausgesondert werden kann, wodurch die Herstellungskosten des Sicherheitsdokumentes möglichst gering gehalten werden können. Weiters kann es bei vorhergehenden Arbeitsschritten, insbesondere bei der Anwendung eines Tiefdruckverfahrens, erforderlich sein hohe Drücke auf das Sicherheitsdokument aufzubringen. Durch das nachfolgende Applizieren des Chips ist es nicht erforderlich, diese Arbeitsschritten unter Berücksichtigung der Gefahr einer Beschädigung eines bereits applizierten Chips auszugestalten, wodurch diese Arbeitsschritte einfacher und kostengünstiger ausgestaltet werden können. Ein weiterer Vorteil ist, daß die Effektfolie den Grundkörper gegebenenfalls nur geringfügig überragt, wodurch die Gefahr einer Beschädigung der Effektfolie und/oder des Chips, insbesondere durch Abscheren, verringert wird.

Die Erfindung wird unter Bezugnahme auf die beigeschlossenen Zeichnungen, in welchen Ausführungsformen dargestellt sind, näher beschrieben. Dabei zeigt:
Fig. 1 eine Ausführungsform eines Sicherheitsdokumentes;
Fig. 2 einen einen Schaltkreis enthaltenden Chip der Ausführungsform gemäß Fig. 1;
Fig. 3 ein Hologramm der Ausführungsform gemäß Fig. 1, welches mit einer Trägerfolie verbunden ist;
Fig. 4 eine Antennenfolie mit Antennen, wobei mit jeweils einer Antenne ein Chip verbunden ist;
Fig. 5 die Antennenfolie gemäß Fig. 4, wobei eine erste Klebeschicht auf die Antennenfolie aufgebracht wird;
Fig. 6 die Antennenfolie gemäß Fig. 5, wobei auf die der Antenne gegenüberliegende Seite eine zweite Klebeschicht aufgebracht ist; und
Fig. 7 die Antennenfolie gemäß Fig. 6, wobei auf die erste Klebeschicht ein Hologramm mit einer Trägerfolie aufgebracht ist.

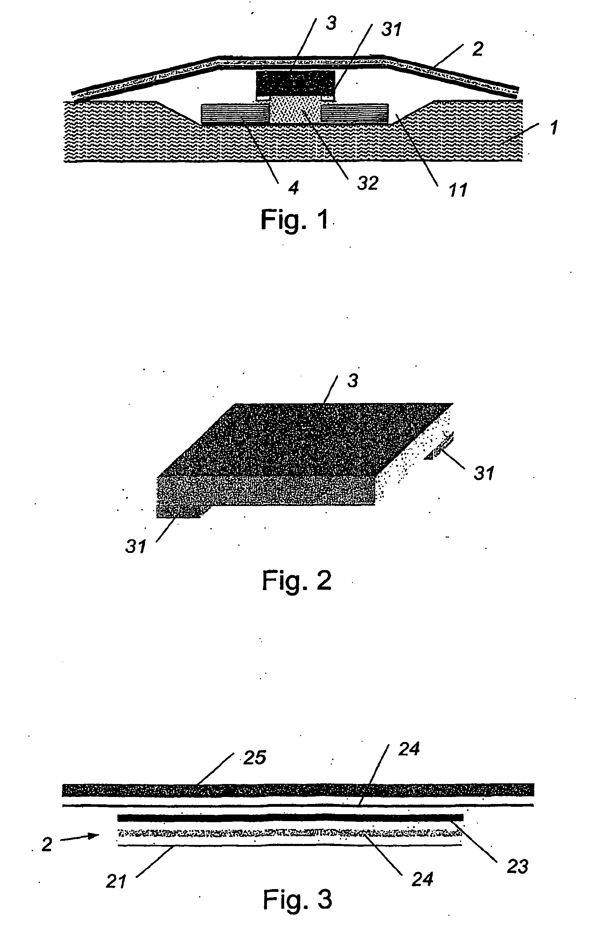

In Fig. 1 ist eine Ausführungsform eines Sicherheitsdokumentes mit einem Grundkörper 1, einer Effektfolie 2 und einem Schaltkreis 3 dargestellt. Der Schaltkreis 3 ist zwischen dem Grundkörper 1 und der Effektfolie 2 angeordnet. Bei anderen Ausführungsformen kann vorgesehen sein, daß zumindest ein Teil des Schaltkreises in der Effektfolie 2 eingebettet ist.

Der Grundkörper 1 kann aus Papier, Polymer, Kompositwerkstoffen, Baumwolle, Kunststoff, od. dgL sein und ist vorzugsweise als dünne Folie od. dgl. ausgebildet, Die Effektfolie kann ein Hologramm 2, ein Kinegramm, Dünnschichtinterferenzfolien, eine metallisierte Folie od. dgl. umfassen.

Zwischen dem Hologramm 2 und dem Grundkörper 1 ist eine Antenne 4 angeordnet, wobei der Schaltkreis 3 mit der Antenne 4 verbunden ist. Weiters ist der Schaltkreis 3 in einer Vertiefung 11 des Grundkörpers 1 angeordnet. Dabei erscheint es günstig zu sein, wenn die Vertiefung 11 als Wasserzeichen ausgebildet ist. Die Vertiefung 11 kann etwa ein Drittel bis etwa die Hälfte der Gesamtdicke des Grundkörpers 1 ausmachen. Die Vertiefung 11 des Grundkörpers 1 kann auch durch Blindprägung erzeugt werden. Weiters kann die Vertiefung 11 mittels Stanzung oder Perforation in das Sicherheitsdokument eingebracht werden, über das das Hologramm appliziert wird. Dabei kann der Schaltkreis 3 und/oder die Antenne 4 die als Loch ausgebildete Vertiefung 11 ausfüllen. Auf der dem Hologramm 2 gegenüberliegenden Seite des Sicherheitsdokumentes kann gegebenenfalls eine Folienapplikation od. dgl. zur Abdeckung des Lochs vorgesehen sein.

In diesem Zusammenhand erscheint es günstig zu sein, wenn die Antenne 4 zwischen dem Schaltkreis 3 und dem Grundkörper 1 angeordnet ist, also im wesentlichen am Boden der Vertiefung 11. Werden die Informationen des Schaltkreises 3 von der dem Hologramm 2 abgewandten Seite des Grundkörpers 1 ausgelesen, so wird durch diese Anordnung eine möglichst große Reichweite wie überhaupt eine Verbesserung der Sende- und Empfangseigenschaften der Antenne 4 erreicht, wodurch insbesondere die Fehleranfälligkeit des Systems verringert wird.

Gemäß Fig. 2 kann der Schaltkreis als Chip 3 ausgebildet sein, welcher Kontaktstellen 31 für die Kontaktierung mit der Antenne 4 aufweist. Mittel des Chips 3 kann der Schaltkreis eigenständig hergestellt werden, wodurch ein modularer Aufbau der Antenne 4, des Schaltkreises 3 und des Hologramms 2 erreicht wird und bei unterschiedlichen Ausführungsformen auf einfache Weise ein Chip 3 mit einem anderem Schaltkreis und/oder eine andere Effektfolie 2 verwendet werden kann. Weiters kann vorgesehen sein, daß der Chip 3 programmierbar ist, sodaß die in ihm gespeicherte Information auch nach dem Aufbringen auf das Sicherheitsdokument verändert werden kann. Dabei erscheint es vorteilhaft, wenn nur ein Teil der Information verändert werden kann und eine Identifikationsummer od. dgL unveränderbar ist. Der Chip 3 und die Antenne 4 können insbesondere als Transponder ausgebildet sein. In Fig. 3 ist schematitsch ein Hologramm 2 dargestellt, welches eine Spiegelschicht 21, eine Mittelschicht 22 und eine Deckschicht 23 umfaßt, wobei die Spiegelschicht 21 üblicherweise aus einem metallischen Material, insbesondere Aluminium, ist. Oberhalb der Deckschicht 23 ist eine Trennschicht 24 und eine Trägerschicht 25 angeordnet. Mittels der Trägerschicht 25 können mehrere Hologramme 2 auf einer Spule od. dgl. angeordnet und gelagert werden. Nach dem Aufbringen des Hologramms 2 auf den Grundkörper 1 kann die Trägerschicht 25 mittels der Trennschicht 24 vom Hologramm 2 getrennt werden.

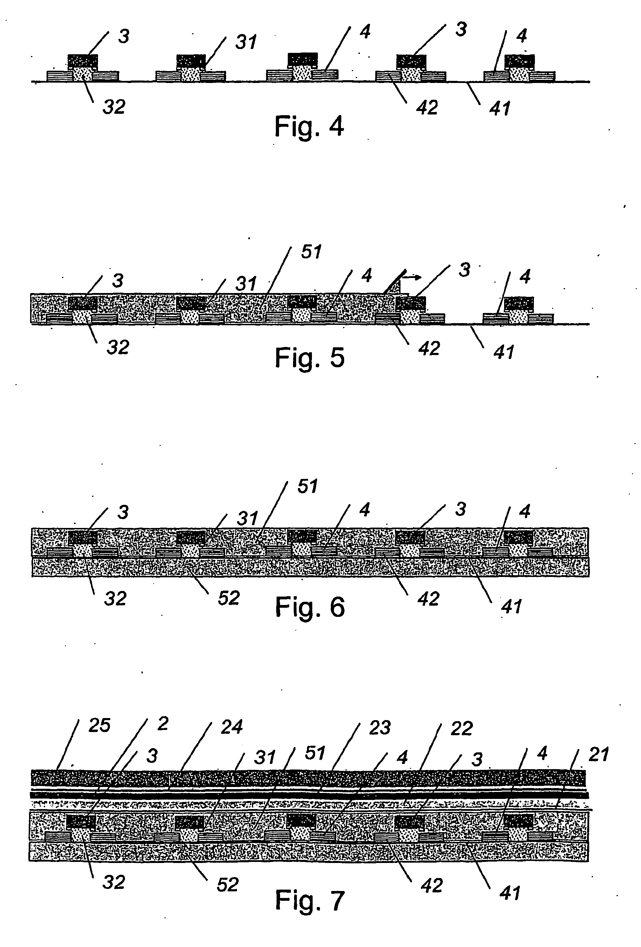

In den Fig. 4 bis 7 ist ein Teil eines Herstellungsverfahrens des Sicherheitsdokumentes dargestellt. Gemäß Fig. 4 ist dabei die Antenne 4 auf einer Antennenfolie 41 aufgebracht. Durch die Antennenfolie sind die Antennen 4 gleichmäßig voneinander beabstandet und können auf einfache Weise mehrere Antennen 4 manipuliert werden. Die Antenne 4 umfaßt eine Metallschicht 42, welche eine gute Leitfähigkeit aufweise, wodurch die Antenne 4 mit geringen Abmessungen ausgebildet werden kann. Als Material der Metallschicht 42 scheinen insbesondere Kupfer, Gold, Silber od. dgL geeignet zu sein. Der Chip 3 ist mit einem Klebemittel 32 mit der Antenne 4 verbunden, wobei die Kontaktstellen 31 leitend mit der Antenne 4 verbunden sind. Der Chip 3 kann mit der Antenne 4 und der Antennenfolie 41 als Einheit produziert werden.

In Fig. 5 ist gezeigt, wie die Antenne 4 und der Chip 3 in eine erste Klebeschicht 51 eingebettet werden, wobei die Klebeschicht 51 den Chip 3 vollständig bedeckt.

Auf die der Antenne 4 gegenüberliegende Seite der Antennenfolle 41 wird gemäß Fig. 6 eine zweite Klebeschicht 52 aufgebracht, woraufhin gemäß Fig. 7 auf die erste Klebeschicht 51 das Hologramm 2 mit der Trägerfolie 25 aufgebracht wird. Abschließend wird die zweite Klebeschicht 52 mit der Vertiefung 11 des Grundkörpers verbunden und die Trägerfolie 25 und die Trennschicht 24 von dem Hologramm 2 getrennt.

In anderen Ansführungsformen kann auch vorgesehen sein, daß zuerst das Hologramm 2 auf die erste Klebeschicht 51 und anschließend die zweite Klebeschicht 52 aufgebracht wird. Der in Fig. 7 gezeigte Aufbau kann aber auch in jeder anderen Reihenfolge erfolgen. Bei diesem Aufbau sind geringe Genauigkeitsanforderungen an die Positionierung des Hologramms 2 über dem Schaltkreis 3 ausreichend.

Vorteilhaft erscheint, daß das Hologramm 2 und der Schaltkreis 3 in einem Arbeituchritt auf den Grundkörper 1 aufgebracht werden können, wodurch eine möglichst geringe Herstellungszeit des Sicherheitsdokumentes erreicht wird. Weiters bildet das Hologramm 2 für den Schaltkreis 3 einen Schutz vor mechanischer und/oder chemisch bedingter Beschädigung. Eine mechanisch und/oder chemisch bedingte Beschädigung des Schaltkreises 3 hat auch eine Beschädigung des Hologramms 2 zur Folge, welche ein optisches Sicherheitsmerkmal darstellt, weshalb eine solche Beschädigung sofort auffällt.

Bei diesem erfindungsgemäßen Verfahren kann der Schaltkreis 3 am Ende des Herstellungsverfahrens des Sicherheitsdokumentes auf dieses aufgebracht werden. Werden die Sicherheitsdokumente nach einzelnen Herstellungsschritten überprüft und fehlerhafte Sicherheitsdokumente ausgeschieden, so kann sichergestellt werden, daß ein nur geringer Ausschuss an Sicherheitsdokumenten nach dem Aufbringen des Schaltkreises 3 und der Effektfolie 2 auftritt. Dadurch können die Herstellungskosten des Sicherheitsdokumentes gering gehalten werden. Weiters wird ausgeschlossen, daß der Schaltkreis 3 und/oder die Effektfolie 2 bei einem Herstellungsschritt des Sicherheitsdokumentes beschädigt werden können, da bei diesem Herstellungschritt der Schaltkreis 3 und die Effektfolie 2 noch nicht auf das Sicherheitsdokument ausgebracht sind. Die Positionierung der Effektfolie 2, des Schaltkreises 3 und der Antenne 4 erfolgt in einem eigenen Arbeitsschritt unbhängig von der Herstellung des Sicherheitsdokumentes, wobei das vorassemblierte Package Effektfolie 2, Schaltkreis 3 und Antenne 4 auf das Sicherheitsdokument aufgebracht wird. Dadurch wird auch eine große Flexibilität bei einer Änderung der Effektfolie 2, des Schaltkreises 3, der Form der Antenne 4 od. dgl. erreicht.

Da den meisten Inhabern des Sicherheitsdokumentes das Vorchandensein des Schaltkreises 3 verborgen bleibt, können von diesen auch keine gezielten Manipulationsversuche der Information des Schaltkreises 3 vorgenommen werden Durch die Anordnung des Schaltkreises 3 in der Vertiefung 11 des Grundkörpers wird erreicht, daß die Gesamtbauhöhe des Gnundkörpers 1, der Antenne 4, des Schaltkreises 3 und des Hologramms 2 gegebenenfalls nur geringfügig über den Grundkörper 1 ohne Vertiefung 11 hinausragt, wodurch die Gefahr einer Beschädigung des Hologramms 2 und/oder des Schaltkreises 3 und/oder der Antenne 4 verringert wird. Weiters erscheint der relativ glatte Übergang zwischen dem Gnmdkörper 1 und dem Hologramm 2 geeignet zu sein, damit das Verhandensein des Schaltkreises 3 den meisten Inhabern des Sicherheitsdokuments verborgen bleibt.

Das Sicherheitsdokument ist als Banknote ausgebildet. Ist der Schaltkreis 3 programmierbar ausgeführt, so kann der Weg einer Banknote zurückverfolgt werden, was insbesondere bei der Verbrechensbekämpfung von Interesse ist Weiters können mittels Geldflußanalysen wertvolle Hinweise für die Wirtschaftspolitik erstellt werden und dadurch die Effizienz von politischen Maßnahmen besser überprütft und vorhergesagt werden.

Durch das Hologramm 2 ist der Schaltkreis 3 vollständig verdeckt, sodaß den meisten Inhabern der Banknote das Vorhandensein des Schaltkreises 3 verborgen bleibt. Werden von Fälschern alle sichtbaren Sicherheitsmelmale gefälscht, so kann dennoch mit einem Lesegerät für die Information des Schaltkreises 3 einfach und schnell festgestellt werden, daß es sich um eine Fälschung handelt.

## Patentansprüche

1. Verfahren zur Herstellung einer Banknote mit einem Grundkörper (1) aus Papier, Polymer, Kompositwerkstoffen od. dgl., wobei die Banknote eine Effektfolie (2), insbesondere ein Hologramm od. dgl., einen zwischen dem Grundkörper (1) und der Effektfolie (2) angeordneten Schaltkreis (3) und eine zwischen der Effektfolie (2) und dem Grundkörper (1) angeordneten Antenne (4) umfasst, wobei der Schaltkreis (3) mit der Antenne (4) verbunden ist, und wobei der Schaltkreis (3) in einer Vertiefung (11) des Grundkörpers (1) angeordnet ist, **dadurch gekennzeichnet, dass** auf eine Antennenfolie (41) mit einer die Antenne (4) enthaltenden Metallschicht (42), insbesondere Kupfer, Gold, Silber od. dgl. umfassend, ein die Metallschicht (42) kontaktierender den Schaltkreis enthaltender Chip (3) befestigt wird, der Chip (3) in eine erste Klebstoffschicht (51) eingebettet wird, auf die erste Klebstoffschicht (51) eine Effektfolie (2) aufgebracht wird, auf die der Metallschicht (42) gegenüberliegenden Seite der Antennenfolie (41) eine zweite Klebstoffschicht (52) aufgebracht wird und die zweite Klebstoffschicht (52) mit der Vertiefung (11) des Grundkörpers (1) verbunden wird.

## Claims

1. A method for producing a banknote, comprising a base body (1) made of paper, polymer, composite substances or the like, with the banknote comprising an effect film (2), especially a hologram or the like, a circuit (3) which is arranged between the base body (1) and the effect film (2), and an antenna (4) which is arranged between the effect film (2) and the base body (1), with the circuit (3) being connected with the antenna (4), and with the circuit (3) being arranged in a depression (11) of the base body (1), **characterized in that** a chip (3) which contacts the metal layer (42) and contains the circuit is fixed to an antenna film (41) with a metal layer (42) containing the antenna (4), especially copper, gold, silver or the like, the chip (3) is embedded in a first adhesive layer (51), an effect film (2) is applied to the first adhesive layer (51), a second adhesive layer (52) is applied to the side of the antenna film (41) which is opposite of the metal layer (42), and the second adhesive layer (52) is connected with the depression (11) of the base body (1).

## Revendications

1. Procédé de fabrication d'un billet de banque avec un corps (1) en papier, en polymère, en matériaux composites ou similaires, dans lequel le billet de banque comprend un film à effet (2), en particulier un hologramme ou similaire, un circuit électrique (3) disposé entre le corps (1) et le film à effet (2) et une antenne (4) disposée entre le film à effet (2) et le corps (1), le circuit électrique (3) étant relié à l'antenne (4) et le circuit électrique (3) étant disposé dans un renfoncement (11) du corps (1), **caractérisé en ce qu'**est fixée sur un film d'antenne (41) avec une couche métallique (42) contenant l'antenne (4), en particulier en cuivre, en or, en argent ou similaire, une puce (3) venant en contact avec la couche métallique (42) et contenant le circuit électrique, la puce (3) est enrobée dans une première couche d'adhésif (51), un film à effet (2) est appliqué sur la première couche d'adhésif (51), une deuxième couche d'adhésif (52) est appliquée sur la face du film d'antenne (41) opposée à la couche métallique (42) et la deuxième couche d'adhésif (52) est liée au renfoncement (11) du corps (1).
